# DEMANDE DE BREVET EUROPEEN

(11) **EP 2 623 692 A1**
(43) Date de publication de la demande: **07.08.2013**
(21) Numéro de dépôt: 13358002.7
(22) Date de dépôt: 01.02.2013
(51) Int. Cl.: E04H 17/18, G21C 13/024, G21C 13/10, G21C 17/003, G21C 19/07, G21C 21/00, G21C 11/08, G21C 13/093

(54) **Enceinte de confinement et son procédé de construction**

(30) Priorité: 03.02.2012 FR 1200317
(71) Demandeur: Entrepose Projets, 92700 Colombes (FR)
(72) Inventeur: Bouchez, Bernard, 13500 Martiques (FR)
(74) Mandataire: Renaud-Goud, Thierry

(57) **Abrégé**

L'invention concerne un procédé de construction d'un réservoir ou enceinte dont les parois sont pourvues d'un revêtement interne métallique étanche, qui comporte les opérations suivantes :
- construire la paroi de fond (20, 43) en y incluant une structure (35 à 42, 60) creuse périphérique s'étendant le long d'un tracé fermé, à la périphérie de la paroi de fond, et étant prolongée par une structure (25, 26) creuse d'extension débouchant à l'extérieur de la paroi de fond, ainsi qu'une structure (61, 62, 400, 401) creuse centrale s'étendant à l'intérieur du tracé fermé;
- poser sur la paroi de fond une structure (45) centrale de revêtement comportant des plaques (50, 51) de revêtement soudées bord à bord, et dont le contour (44) correspond au tracé de la structure creuse périphérique;
- souder la structure centrale de revêtement, le long de son contour, à la structure creuse centrale;
- fabriquer une structure (46) mixte de revêtement comportant une plaque (461) de revêtement latéral, une pièce (462) de revêtement d'angle, et une plaque (460) de revêtement du fond soudées bord à bord deux à deux ; et
- souder la structure (46) mixte de revêtement à la structure (45) centrale de revêtement et à la structure (35 à 42, 60) creuse périphérique, le long du contour (44) de la structure centrale de revêtement.

## Description

### DOMAINE TECHNIQUE

La présente invention est relative à une enceinte de confinement et à un procédé de construction d'une telle enceinte.

L'invention s'applique aux réservoirs et enceintes pourvus d'un revêtement interne comportant des éléments de revêtement soudés bord à bord, et notamment à la construction de l'enceinte interne faisant partie d'une double enceinte contenant un réacteur d'une centrale nucléaire.

### ETAT DE LA TECHNIQUE

Le confinement d'un réacteur nucléaire peut être obtenu par une double enceinte comportant une enceinte externe en béton qui renferme une enceinte interne en béton, cette dernière étant revêtue intérieurement par un revêtement métallique étanche.

Ce revêtement peut être essentiellement constitué de plaques d'acier soudées bord à bord.

Pour permettre un contrôle de la qualité des soudures du revêtement métallique, notamment un contrôle par radiographie, on peut inclure des profilés creux dans (ou sur) la paroi en béton recevant le revêtement métallique, en regard des cordons de soudure, comme décrit dans les brevets FR2383289 et EP191672.

Le brevet EP191672 décrit un bassin dont les parois sont revêtues d'un revêtement étanche de tôles soudées entre elles par leurs bords, par l'intermédiaire de cordons de soudure, et sont supportées sous chaque cordon de soudure par une poutre comportant un canal longitudinal de visite.

Le fond du bassin décrit dans ce brevet comporte un réseau de poutres horizontales raccordées par des raccords creux en X. Les parois latérales verticales du bassin comportent des poutres verticales raccordées à des poutres horizontales du fond par des raccords creux en T qui permettent la communication des canaux des poutres horizontales avec des poutres qui s'étendent en dehors du bassin.

Un tel réseau de poutres nécessite le revêtement du bassin par des sections de revêtement préfabriquées dont les contours respectifs correspondent aux contours des mailles du réseau de poutres.

Il faudrait pour cela fabriquer des sections de revêtement comportant chacune des tôles de revêtement du fond, des tôles de revêtement d'une paroi latérale, ainsi que des pièces de revêtement d'angle - par exemple des équerres ou des pièces illustrées dans le brevet US5307388 - qui relient les tôles de revêtement du fond aux tôles de revêtement latéral.

Pour la construction d'un bassin, réservoir, ou enceinte de grandes dimensions, la fabrication d'une telle section de revêtement, sa mise en place sur le réseau de poutres, et sa solidarisation par soudure à d'autres sections de revêtement déjà en place, sont des opérations complexes et délicates en raison notamment de la masse élevée et de la faible tenue d'une telle section de revêtement.

Alternativement, on pourrait (pré)fabriquer des sections de revêtement comportant uniquement des tôles de revêtement du fond et des pièces de revêtement d'angle, mettre en place ces sections sur un réseau de poutres équipant la paroi de fond, souder bord à bord ces sections de revêtement à des sections de revêtement déjà en place, puis mettre en place et souder des tôles de revêtement latéral aux pièces de revêtement d'angle des sections de revêtement du fond préalablement mises en place.

Cette opération de soudage des tôles de revêtement latéral aux pièces de revêtement d'angle devrait être effectuée à une faible hauteur au dessus de la paroi de fond, ce qui la rendrait difficile ou impossible, notamment lorsque des armatures de renfort du béton s'étendent au voisinage des pièces de revêtement d'angle.

En outre, après la mise en oeuvre d'un tel procédé, le contrôle de la qualité des soudures entre les pièces de revêtement d'angle et les tôles de revêtement latéral présenterait également de grandes difficultés.

Par ailleurs, la présence de deux réseaux croisés de poutres horizontales parallèles pour le contrôle des soudures du revêtement du fond, n'est généralement pas adaptée à la construction d'un réservoir ou d'une enceinte dont la paroi de base - ou fond - présente un contour totalement ou partiellement curviligne, en particulier un contour circulaire.

### EXPOSÉ DE L'INVENTION

Un objectif de l'invention est de proposer un réservoir ou une enceinte pourvu(e) d'un revêtement interne comportant des éléments de revêtement soudés bord à bord, qui soit amélioré(e) et/ou qui remédie, en partie au moins, aux lacunes ou inconvénients des réservoirs et enceintes de confinement connus.

Un objectif de l'invention est de proposer un réservoir ou une enceinte pourvu(e) d'un revêtement interne comportant des éléments de revêtement soudés bord à bord, et comportant une base dont le contour est en partie au moins curviligne ainsi qu'une paroi latérale s'élevant à partir de la base, pour lequel (ou laquelle) la réalisation - et le contrôle de la qualité - des soudures dans la région de liaison entre la base et la paroi latérale, soient facilités.

Un objectif de l'invention est de proposer un procédé de construction d'un réservoir ou d'une enceinte pourvu(e) d'un revêtement interne comportant des éléments de revêtement soudés entre eux, qui soit amélioré et/ou qui remédie, en partie au moins, aux lacunes ou inconvénients des procédés connus de construction de réservoirs et enceintes de confinement.

Sauf indication explicite ou implicite contraire, le terme réservoir est utilisé dans la présente demande pour désigner un réservoir ou une enceinte.

Selon un aspect de l'invention, il est proposé un procédé de construction d'un réservoir (ou d'une enceinte) dont la paroi de fond et la (ou les) paroi(s) latérale(s) sont pourvues d'un revêtement interne métallique étanche, qui comporte les opérations suivantes :
- construire la paroi de fond en y incluant au moins une structure creuse périphérique s'étendant (horizontalement) le long d'un tracé fermé, à la périphérie de la paroi de fond, et étant prolongée par au moins une structure creuse d'extension débouchant à l'extérieur de la paroi de fond, ainsi qu'une structure creuse centrale s'étendant à l'intérieur du tracé fermé ;
- poser sur la paroi de fond une structure centrale de revêtement, généralement plane, comportant des plaques de revêtement soudées bord à bord, et dont le contour correspond sensiblement au tracé (fermé) de la structure creuse périphérique ;
- souder (bout à bout) la structure centrale de revêtement, le long de son contour, à la structure creuse centrale ;
- fabriquer au moins une structure mixte de revêtement comportant (au moins) une plaque de revêtement latéral (agencée pour faire partie du revêtement de la (ou des) paroi(s) latérale(s) du réservoir ou enceinte), (au moins) une pièce de revêtement d'angle, et (au moins) une plaque de revêtement du fond, ces plaques et cette pièce étant soudées bord à bord deux à deux ; et
- souder (bout à bout) la structure mixte de revêtement à la structure centrale de revêtement et à la structure creuse périphérique, le long du contour de la structure centrale de revêtement - donc le long du tracé de la structure creuse périphérique -.

Notamment lorsque le fond du réservoir présente un contour circulaire ou autrement curviligne, la structure creuse périphérique peut s'étendre le long d'un tracé curviligne adapté à la forme et aux dimensions du contour du fond du réservoir, en particulier un tracé circulaire dont le diamètre est peu inférieur au diamètre du fond du réservoir. Dans ces circonstances, la structure creuse d'extension peut s'étendre selon un segment rectiligne tangent au tracé de la structure creuse périphérique.

Alternativement et notamment lorsque le fond du réservoir présente un contour circulaire ou autrement curviligne, la structure creuse périphérique peut s'étendre le long d'un tracé polygonal adapté à la forme et aux dimensions du contour du fond du réservoir, de préférence selon un tracé polygonal dont l'ordre est supérieur à 4, en particulier situé dans une plage allant de 6 à 20. Dans ces circonstances, plusieurs structures creuses d'extension peuvent s'étendre respectivement dans le prolongement de certains cotés au moins du tracé polygonal de la structure creuse périphérique.

Selon un mode préféré de réalisation, on (pré)fabrique la structure centrale de revêtement en plusieurs sections que l'on dépose sur la paroi de fond et que l'on soude à des structures creuses centrales de la paroi de fond qui débouchent à l'extérieur de la paroi de fond, les unes après les autres.

On peut (pré)fabriquer la structure mixte de revêtement en une seule pièce de forme annulaire que l'on dépose sur la paroi de fond, pour la souder à la structure centrale de revêtement par l'intermédiaire des plaques de revêtement du fond que cette structure mixte comporte.

On peut également fabriquer la structure mixte de revêtement en plusieurs pièces ou secteurs que l'on dépose sur la paroi de fond et que l'on soude à la structure centrale de revêtement par l'intermédiaire de plaque(s) de revêtement du fond que comporte chaque pièce ou secteur de cette structure mixte, les unes après les autres.

La structure centrale de revêtement du fond peut être essentiellement constituée de plaques métalliques de contours rectangulaires ou trapézoïdaux.

La structure mixte (et périphérique) de revêtement du fond peut comporter une couronne dont le contour externe correspond sensiblement au contour du fond, et dont la partie interne s'étend sensiblement selon le contour polygonal ou curviligne de la structure centrale du revêtement.

La structure mixte périphérique de revêtement du fond peut comporter des plaques planes métalliques dont le contour est partiellement rectiligne et partiellement curviligne, des plaques métalliques cintrées selon un rayon de cintrage correspondant au rayon interne du réservoir, ainsi qu'un profilé d'angle - tel qu'une cornière - également métallique -, qui est cintré sensiblement selon ledit rayon de cintrage, et qui comporte deux ailes s'étendant respectivement dans le prolongement des plaques planes et cintrées, ces ailes étant soudées bord à bord à ces plaques.

Selon un mode préféré de réalisation, la structure centrale de revêtement et les plaques du revêtement du fond faisant partie de la structure mixte de revêtement sont planes.

Selon un mode préféré de réalisation, le contour de la structure centrale de revêtement est un polygone convexe, en particulier un polygone convexe régulier dont l'ordre est situé dans une plage allant de 6 à 20, par exemple un octogone ou un décagone convexe régulier.

Selon un autre aspect de l'invention, il est proposé un réservoir dont les parois sont pourvues d'un revêtement interne métallique étanche, en particulier un réservoir obtenu par un procédé selon l'invention, qui comporte un fond de contour curviligne et une paroi latérale s'élevant à partir du fond. Le revêtement du fond comporte une structure centrale ainsi qu'une structure mixte périphérique entourant la structure centrale. Le réservoir comporte des structures creuses s'étendant le long du contour de la structure centrale du revêtement du fond, de façon à permettre le contrôle de la qualité des soudures reliant les parties centrale et mixte périphérique de revêtement du fond.

Selon un autre aspect de l'invention, il est proposé un réservoir dont les parois sont pourvues d'un revêtement interne métallique étanche, qui comporte
- un fond de contour curviligne ;
- une paroi latérale s'élevant à partir du fond ;
- une structure creuse périphérique s'étendant le long d'un tracé fermé à la périphérie de la paroi de fond ;
- une structure creuse centrale s'étendant à l'intérieur du tracé fermé ;
- une structure creuse d'extension prolongeant la structure creuse périphérique et débouchant à l'extérieur de la paroi de fond ;
le revêtement comporte une structure centrale de contour polygonal ou curviligne ainsi qu'une structure mixte périphérique entourant la structure centrale de revêtement et soudée à cette structure centrale le long de son contour;
et la structure creuse périphérique s'étend le long du contour de la structure centrale du revêtement du fond, de façon à permettre le contrôle de la qualité des soudures reliant les structures centrale et mixte périphérique de revêtement.

Les plaques et pièces métalliques de revêtement peuvent être réalisées dans un alliage d'acier à faible teneur en nickel, de type « acier carbone », dans un alliage d'acier acier « inoxydable » présentant une plus forte teneur en nickel, ou dans un alliage d'aluminium, par exemple.

L'invention s'applique notamment aux réservoirs et enceintes présentant un axe de symétrie (et/ou de révolution) vertical, un diamètre de l'ordre d'une ou plusieurs dizaines de mètres, et une hauteur du même ordre de grandeur.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

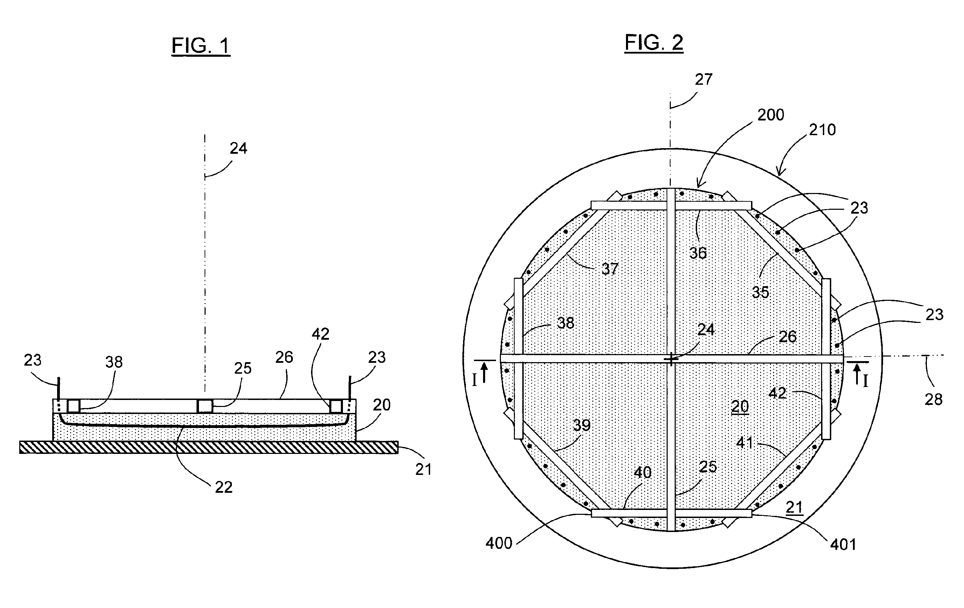

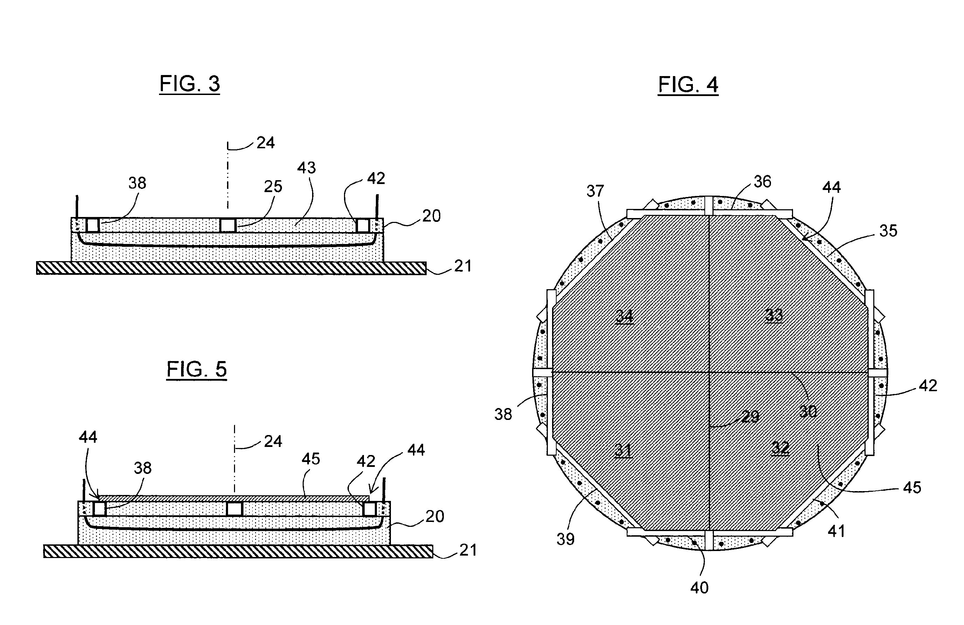

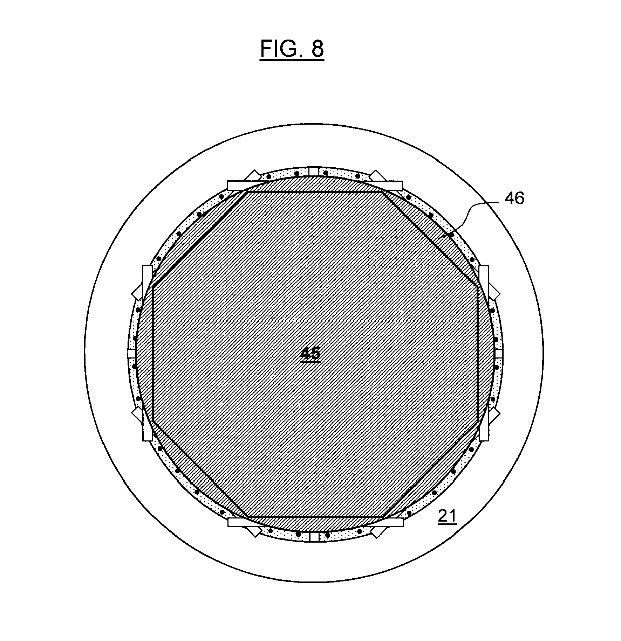

Les figures 1 à 8 illustrent de façon schématique des étapes successives d'un procédé de construction d'un réservoir ou d'une enceinte cylindrique de section circulaire, dans plusieurs configurations distinctes, et dans lesquelles les figures 2, 4, 6, et 8 sont des vues en plan du réservoir en construction, et les figures 1, 3, 5, et 7 sont des vues en coupe du réservoir en construction, dans un plan vertical proche d'un plan diamétral :
- la configuration illustrée figures 1 et 2 correspond à une étape de mise en place de tubes servant au contrôle de soudures, sur une dalle en béton armé ;
- la configuration illustrée figure 3 correspond à une étape de finition de la dalle en béton armé pour y inclure les tubes ;
- la configuration illustrée figures 4 et 5 correspond à une étape de mise en place de la structure centrale du revêtement de la paroi de fond ;
- la figure 6 illustre la structure mixte périphérique du revêtement adaptée à la structure centrale des figures 4 et 5 et permettant d'obtenir la configuration illustrée figures 7 et 8 qui correspond à une étape de liaison par soudure des structures centrale et périphérique du revêtement.

La figure 9 est une vue en perspective schématique d'une structure de liaison incluant une structure mixte périphérique de revêtement adaptée à une structure centrale de revêtement de contour décagonal, pour former le revêtement métallique illustré (en perspective également) figure 10.

La figure 11 est une vue en coupe avec arrachement, dans un plan vertical, à échelle agrandie, de la liaison entre le revêtement interne de la base d'un réservoir avec le revêtement de la paroi latérale de ce réservoir.

La figure 12 illustre, en vue en plan schématique, un réservoir en construction dans un état d'avancement similaire à celui illustré figures 4 et 5, dans lequel la structure centrale de revêtement présente un contour dodécagonal régulier non convexe.

La figure 13 illustre, en vue en plan schématique, un réservoir en construction dans un état d'avancement similaire à celui illustré figures 1 et 2, dans lequel la structure creuse périphérique s'étend le long d'un tracé circulaire, et est prolongée par des structures creuse d'extension s'étendant tangentiellement au tracé de la structure creuse périphérique.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

Par référence à la figure 1 notamment, qui est une vue selon 1-1 de la figure 2, la paroi de fond du réservoir comporte une dalle de fondation 20 en béton coulée sur une autre dalle 21 qui peut faire partie de la paroi externe d'un réservoir à double paroi.

Des armatures 22 en acier sont en partie noyées dans la dalle 20 et sont courbées au voisinage de leurs extrémités 23 qui s'étendent au dessus de la dalle 20 et à sa périphérie, sensiblement verticalement, en attente de leur raccordement à d'autres armatures (non représentées) servant à renforcer la paroi latérale du réservoir.

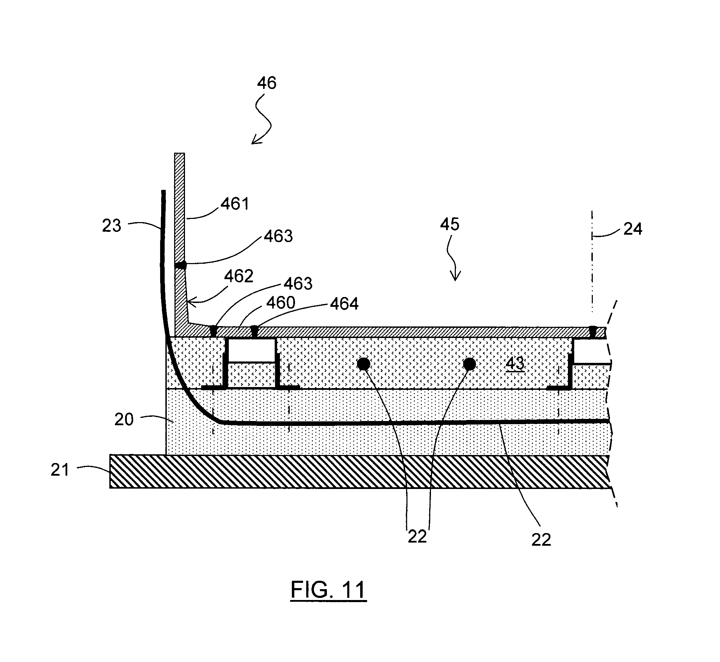

Des tronçons de tube (creux) en acier, qui serviront à contrôler la qualité des soudures d'éléments de revêtement recouvrant la dalle 20, s'étendent sur la dalle 20 à laquelle ils peuvent être fixés par l'intermédiaire d'équerres comme illustré figure 11.

Comme illustré figure 2 notamment, les dalles 20 et 21 présentent des contours respectifs 200, 210 circulaires centrés sur l'axe vertical 24 de symétrie du réservoir.

Le réseau de tronçons de tubes servant au contrôle des soudures comporte deux tronçons de tube 25, 26 rectilignes s'étendant respectivement selon deux axes 27, 28 horizontaux et orthogonaux se croisant sur l'axe 24.

Ces tronçons 25, 26 servent à contrôler les soudures 29, 30 (bout à bout) reliant bord à bord quatre secteurs 31 à 34 de la structure centrale 45 de revêtement illustrée figure 4 notamment, et forment deux structures creuses centrales de la paroi de fond qui débouchent à l'extérieur de cette paroi de fond.

Le réseau de tronçons de tube comporte en outre huit tronçons de tube rectilignes 35 à 42, sensiblement identiques, qui s'étendent horizontalement sur la périphérie de la dalle 20, le long des cotés d'un octogone régulier centré sur l'axe 24, et forment une structure creuse périphérique le long - et à l'intérieur - de laquelle peut être déplacé un appareil de contrôle de soudures.

A chaque « croisement » de deux tronçons de tube, ces tronçons sont usinés (percés) pour qu'un appareil de contrôle - en particulier un film ou un détecteur sensible aux rayons X - puisse se déplacer à l'intérieur de chaque tronçon de tube, sur toute la longueur du tronçon de tube. Ces deux tronçons sont également soudés l'un à l'autre afin de délimiter un volume étanche susceptible de recevoir cet appareil de contrôle.

Par ailleurs, pour permettre l'introduction d'un tel appareil de contrôle dans chacun de ces tronçons de tube, chacun d'eux est ouvert à chacune de ses deux extrémités longitudinales - telles que les extrémités 400 et 401 du tronçon de tube 40 repérées figure 2 -, et ces extrémités ouvertes s'étendent à l'extérieur de la dalle 20, entre deux extrémités 23 consécutives d'armature.

Lorsque ces tronçons de tubes sont correctement positionnés et fixés à la dalle 20, une autre couche/dalle 43 de béton est coulée sur la dalle 20, entre les tronçons de tube et jusqu'à affleurer leurs faces supérieures respectives, comme illustré figure 3.

Comme illustré figures 2 et 4 notamment, les portions d'extrémité 400, 401 des tronçons de tube 35 à 42 forment des structures creuses d'extension qui débouchent, sensiblement tangentiellement, à l'extérieur de la dalle 20, 43 de la paroi de fond du réservoir.

La structure centrale 45 de revêtement est ensuite mise en place sur la dalle 43 et sur les tronçons de tube inclus dans cette dalle, de façon à ce que son contour 44 octogonal s'étende sensiblement le long des axes longitudinaux respectifs des tronçons périphériques de tube 35 à 42, ce qui correspond à la configuration illustrée figures 4 et 5.

Pour la réalisation d'une enceinte ou d'un réservoir de grande dimension pourvu d'un revêtement interne métallique, la structure centrale de revêtement peut être préfabriquée en plusieurs sections ou secteurs 31 à 34, par exemple en quatre, six, ou huit secteurs.

Chaque section ou secteur peut par exemple être obtenu(e) par soudage bord à bord de plusieurs plaques d'acier présentant chacune plusieurs millimètres d'épaisseur et plusieurs mètres de longueur et/ou de largeur.

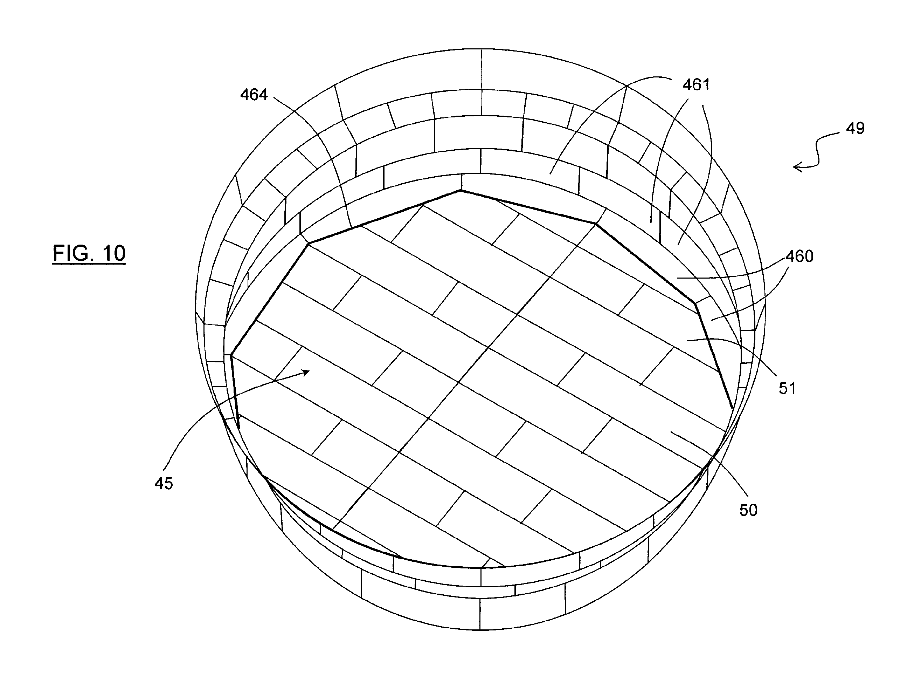

Pour la réalisation d'une structure centrale de revêtement présentant un contour polygonal, on peut souder bord à bord des plaques métalliques de contour rectangulaire telles que celle repérée 50 figure 10, ou de contour trapézoïdal comme la plaque repérée 51 figure 10.

Deux sections adjacentes de cette structure centrale de revêtement peuvent être ensuite successivement disposées bord à bord sur la dalle 43 et sur les tubes de contrôle 25, 26, 35 à 42, avant d'être soudées mutuellement et aux tubes de contrôle, le long de ces tubes.

Les autres sections de la structure centrale de revêtement peuvent ainsi être disposées une à une sur la dalle 43, puis soudées aux sections déjà assemblées et aux tubes de contrôle, de façon à former une structure centrale de revêtement interne plane et étanche, de contour polygonal ou circulaire.

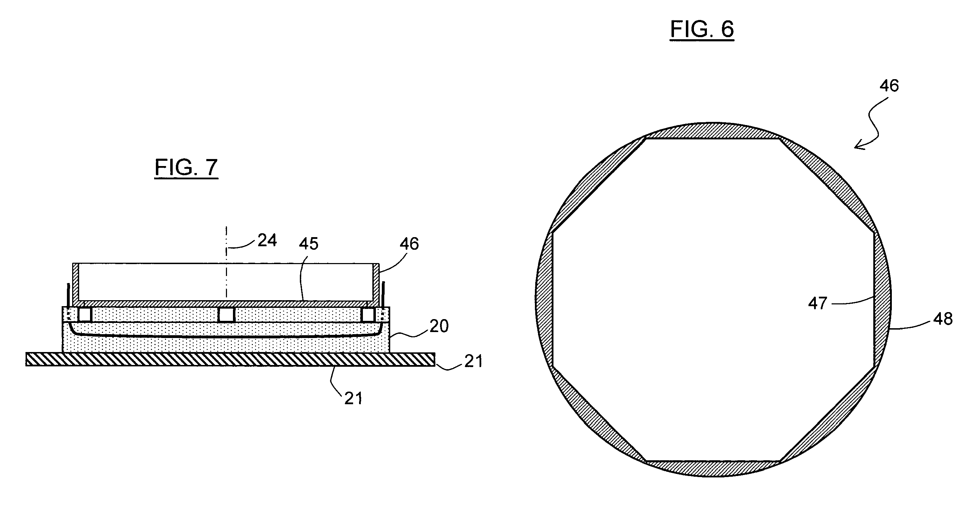

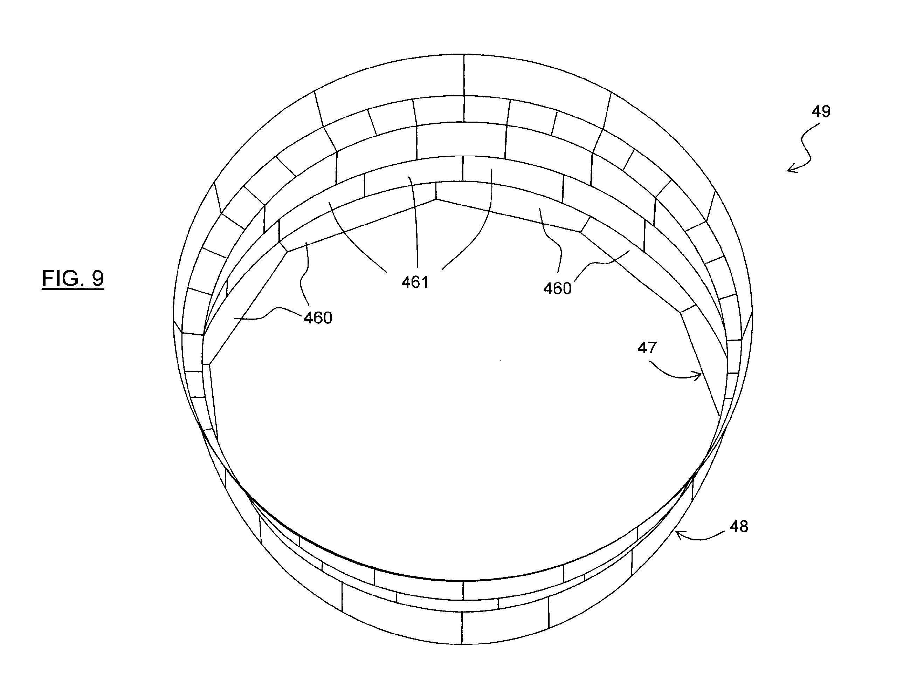

On procède par ailleurs à la fabrication d'une structure 49 de liaison - telle que celle illustrée figure 9 - qui inclue une structure 46 mixte de revêtement interne périphérique telle que celle illustrée figure 6.

Cette structure 46 mixte périphérique présente, comme illustré figures 6 et 9 notamment, un contour externe 48 circulaire et une forme interne 47 - ou « tracé interne » - octogonal(e) ou décagonal(e) adapté(e) au contour de la structure 45 centrale de revêtement correspondante.

Par référence aux figures 9 à 11 notamment, la structure 46 mixte de revêtement comporte des plaques planes 460 juxtaposées dont le contour « interne » 47 est rectiligne et dont le contour « externe » 48 est curviligne (en arc de cercle) et raccordé bord à bord avec une aile du profilé d'angle 462.

Les plaques 460 servent à revêtir la périphérie du fond du réservoir.

La structure 46 comporte en outre des plaques 461 juxtaposées qui sont cintrées selon un rayon de cintrage correspondant au rayon interne du réservoir, ainsi qu'un profilé d'angle 462 également cintré sensiblement selon ledit rayon de cintrage.

Les plaques 461 servent à revêtir la partie inférieure de la paroi latérale du réservoir.

La structure 49 de liaison comporte d'autres plaques de revêtement qui s'étendent au dessus - et dans le prolongement - des plaques cintrées 461.

Le profilé en « L» 462 comporte deux ailes s'étendant respectivement dans le prolongement des plaques 460, 461, ces ailes étant soudées bord à bord à ces plaques selon les cordons de soudure 463 illustrés figure 11.

La structure 46 peut être préfabriquée par tranches ou secteurs angulaires qui sont assemblés pour former une couronne telle que celles illustrées figures 6 et 9.

La structure annulaire 46 complète - ou chaque secteur angulaire de cette structure - peut ensuite être déposé(e) sur la structure creuse périphérique, autour - et sensiblement au contact - de la structure centrale 45 de revêtement, pour être soudé(e) bord à bord, avec cette structure 45 et les tubes de la structure creuse périphérique, selon un cordon de soudure périphérique 464 illustré figure 11 notamment.

La vérification de la bonne qualité de ces soudures peut être obtenue en disposant un appareil de contrôle dans la cavité tubulaire délimitée par la structure creuse périphérique, et en déplaçant cet appareil dans cette structure, le long de son tracé qui correspond sensiblement à celui du cordon de soudure 464.

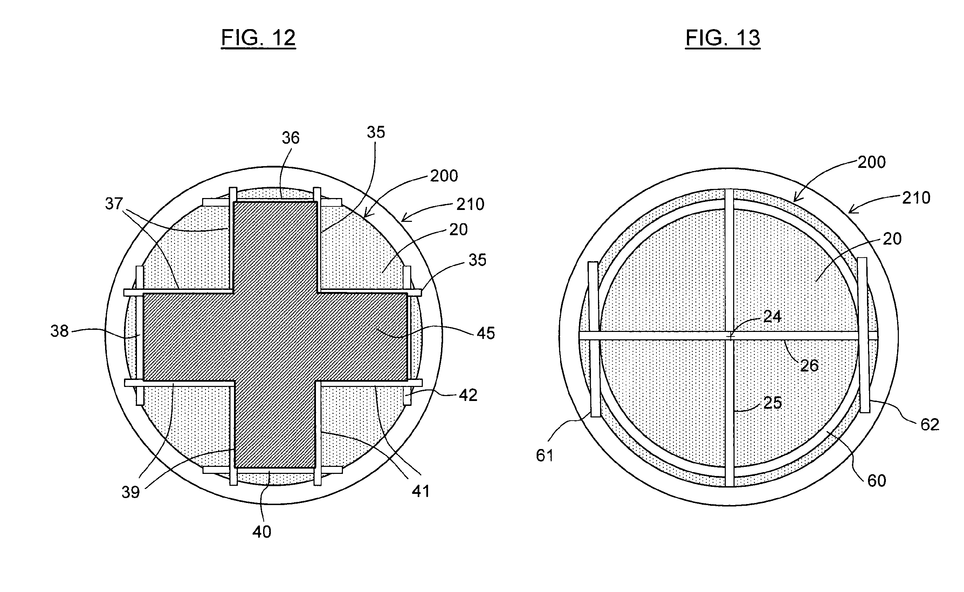

Dans une variante de réalisation illustrée figure 12, la structure creuse périphérique de contrôle comporte douze tronçons de tube 35 à 42 qui s'étendent le long d'un tracé dodécagonal correspondant au contour de la structure centrale de revêtement.

Lorsque la structure centrale de revêtement présente un contour polygonal, comme illustré figures 4 et 12 notamment, le contrôle des soudures reliant cette structure à la structure périphérique de revêtement, peut être obtenu en introduisant un appareil de contrôle dans chaque cavité tubulaire délimitée par les tronçons de la structure creuse périphérique, et en déplaçant cet appareil dans chacun de ces tronçons.

Dans une autre variante de réalisation illustrée figure 13, la structure 60 creuse périphérique de contrôle s'étend selon un tracé circulaire centré sur l'axe 24.

La paroi de fond comporte en outre deux structures 61, 62 creuses d'extension s'étendant respectivement selon deux segments rectilignes tangents au tracé de la structure 60 périphérique, et qui débouchent chacune à leurs deux extrémités, à l'extérieur de la paroi 20, 43 de fond, pour permettre l'introduction et le retrait d'un appareil de contrôle dans la cavité de contrôle de forme toroïdale qui est délimitée par la structure 60.

La réalisation de l'invention est susceptible de nombreuses variantes et présente de nombreux avantages parmi lesquels figurent la possibilité de réaliser la soudure entre la (ou les) pièce(s) d'angle reliant le revêtement du fond au revêtement latéral, en usine ou dans un atelier distinct du site de construction du réservoir, ainsi que la possibilité de contrôler cette soudure en usine ou en atelier.

## Revendications

1. .Procédé de construction d'un réservoir dont la paroi de fond et la (ou les) paroi(s) latérale(s) sont pourvues d'un revêtement interne métallique étanche, **caractérisé en ce qu'il** comporte les opérations suivantes :
- construire la paroi de fond (20, 43) en incluant dans cette paroi une structure (35 à 42, 60) creuse périphérique s'étendant le long d'un tracé fermé à la périphérie de la paroi de fond, une structure (25, 26) creuse centrale s'étendant à l'intérieur du tracé fermé, et une structure (61, 62, 400, 401) creuse d'extension prolongeant la structure creuse périphérique et débouchant à l'extérieur de la paroi de fond;
- poser sur la paroi de fond une structure (45) centrale de revêtement comportant des plaques (50, 51) de revêtement soudées bord à bord, et dont le contour (44) correspond sensiblement au tracé fermé de la structure creuse périphérique;
- souder la structure centrale de revêtement à la structure creuse centrale;
- fabriquer une structure (46) mixte de revêtement comportant une plaque (461) de revêtement latéral, une pièce (462) de revêtement d'angle, et une plaque (460) de revêtement du fond, ces plaques et cette pièce de revêtement étant soudées bord à bord deux à deux ; et
- souder la structure (46) mixte de revêtement à la structure (45) centrale de revêtement et à la structure (35 à 42, 60) creuse périphérique, le long du contour (44) de la structure centrale de revêtement.

2. Procédé selon la revendication 1 dans lequel la paroi de fond du réservoir présente un contour (200) curviligne, en particulier un contour circulaire.

3. Procédé selon la revendication 1 ou 2 dans lequel la structure (60) creuse périphérique s'étend le long d'un tracé curviligne adapté au contour du fond du réservoir, en particulier le long d'un tracé circulaire dont le diamètre est peu inférieur au diamètre du fond du réservoir, et dans lequel la structure (61, 62) creuse d'extension s'étend selon un segment rectiligne tangent au tracé de la structure creuse périphérique.

4. Procédé selon la revendication 1 ou 2 dans lequel la structure (35 à 42) creuse périphérique s'étend le long d'un tracé polygonal s'étendant à l'intérieur du contour (200) du fond du réservoir.

5. Procédé selon la revendication 4 dans lequel le nombre de cotés du tracé polygonal est supérieur à 4, en particulier situé dans une plage allant de 6 à 20, le tracé polygonal étant de préférence régulier et/ ou convexe.

6. Procédé selon l'une quelconque des revendications 4 ou 5 dans lequel plusieurs structures (400, 401) creuses d'extension s'étendent respectivement dans le prolongement de cotés du tracé polygonal.

7. Procédé selon l'une quelconque des revendications 1 à 6 dans lequel on fabrique la structure (45) centrale de revêtement en plusieurs sections (31 à 34) que l'on dépose sur la paroi de fond et que l'on soude à des structures (25, 26) creuses centrales de la paroi de fond qui débouchent à l'extérieur de la paroi de fond, les unes après les autres.

8. Procédé selon l'une quelconque des revendications 1 à 7 dans lequel on fabrique la structure (46) mixte de revêtement en une seule pièce de forme annulaire que l'on dépose sur la paroi de fond, pour la souder à la structure (45) centrale de revêtement par l'intermédiaire des plaques (460) de revêtement du fond que comporte cette structure mixte.

9. Procédé selon l'une quelconque des revendications 1 à 7 dans lequel on fabrique la structure (46) mixte de revêtement en plusieurs pièces ou secteurs que l'on dépose sur la paroi de fond et que l'on soude à la structure (45) centrale de revêtement par l'intermédiaire de plaque(s) (460) de revêtement du fond que comporte chaque pièce ou secteur de cette structure mixte, les unes après les autres.

10. Procédé selon l'une quelconque des revendications 1 à 9 dans lequel la structure (45) centrale de revêtement du fond comporte des plaques (50, 51) métalliques de contours rectangulaires ou trapézoïdaux.

11. Procédé selon l'une quelconque des revendications 1 à 10 dans lequel la structure (26) mixte périphérique de revêtement présente un contour externe (48) correspondant sensiblement au contour (200) du fond, et un bord interne (47) s'étendant sensiblement selon le contour (44) de la structure (45) centrale de revêtement.

12. Procédé selon l'une quelconque des revendications 1 à 11 dans lequel la structure (26) mixte périphérique de revêtement comporte des plaques (460) métalliques présentant un contour partiellement rectiligne et partiellement curviligne.

13. Procédé selon l'une quelconque des revendications 1 à 12 dans lequel la structure (45) centrale de revêtement et des plaques (460) de revêtement de la structure mixte de revêtement sont planes.

14. Procédé selon l'une quelconque des revendications 1 à 13 dans lequel les structures creuses centrale (25, 26), périphérique (35 à 42, 60), et d'extension (61, 62, 400, 401) comportent des tronçons de tube métallique de section rectangulaire noyés dans la paroi (20, 43) de fond en béton.

15. Réservoir dont les parois sont pourvues d'un revêtement interne métallique étanche, en particulier un réservoir obtenu par un procédé selon l'une quelconque des revendications 1 à 14, **caractérisé en ce qu'il** comporte :
- un fond (20, 43) de contour (200) curviligne ;
- une paroi latérale s'élevant à partir du fond ;
- une structure (35 à 42, 60) creuse périphérique s'étendant le long d'un tracé fermé à la périphérie de la paroi de fond ;
- une structure (25, 26) creuse centrale s'étendant à l'intérieur du tracé fermé ;
- une structure (61, 62, 400, 401) creuse d'extension prolongeant la structure creuse périphérique et débouchant à l'extérieur de la paroi de fond ;
**en ce que** le revêtement comporte une structure (45) centrale de contour (44) polygonal ou curviligne ainsi qu'une structure (46) mixte périphérique entourant la structure centrale de revêtement et soudée à cette structure centrale le long de son contour (44) ;
et **en ce que** la structure (35 à 42, 60) creuse périphérique s'étend le long du contour de la structure centrale du revêtement du fond, de façon à permettre le contrôle de la qualité des soudures (464) reliant les structures centrale (45) et mixte périphérique (46) de revêtement.
